# EUROPÄISCHE PATENTANMELDUNG

(11) **EP 1 072 485 A2**
(43) Veröffentlichungstag der Anmeldung: **31.01.2001**
(21) Anmeldenummer: 00112659.8
(22) Anmeldetag: 15.06.2000
(51) Int. Cl.: B60R 22/46, B60R 22/28

(54) **Sicherheitsgurtsystem**

(30) Priorität: 27.07.1999 DE 19935248
(71) Anmelder: DaimlerChrysler AG, 70567 Stuttgart (DE)
(72) Erfinder: Röder, Thomas, 71717 Beilstein (DE)

(57) **Zusammenfassung**

Sicherheitsgurtsystem für Kraftfahrzeuge mit einem das Sicherheitsgurtband führenden Sicherheitsgurtaufrollautomaten, der in einer am Fahrzeugrahmen angeordneten, im wesentlichen vertikalen Gleitführung höhenverstellbar geführt ist, mit einer Arretiervorrichtung, die den Sicherheitsgurtaufrollautomaten in einer funktionsfähigen Ausgangsposition in der Gleitführung arretiert und im Kollisionsfall die Arretierung öffnet, mit einem Sicherheitsgurtstraffmechanismus, der bei geöffneter Arretierung den Sicherheitsgurtaufrollautomaten entgegengesetzt zur Richtung des Sicherheitsgurtbandes und der daran angreifenden kollisionsbedingten Zugkräfte in der Gleitführung verschiebt, bis das Sicherheitsgurtband ausreichend gestrafft ist, und mit einem Sicherheitsgurtkraftbegrenzungsmechanismus, der die vom Sicherheitsgurtstraffmechanismus erzeugte Straffung des Sicherheitsgurtbandes in vorgegebener Weise begrenzt, wobei ein Rückstellmechanismus, der nach Ende der Kollision, wenn keine Zugkräfte am Sicherheitsgurtband mehr angreifen, den Sicherheitsgurtaufrollautomaten in seine funktionsfähige Ausgangsposition in der Gleitführung zurückführt, wo dieser wieder arretiert wird.

## Beschreibung

Die Erfindung betrifft ein Sicherheitsgurtsystem für Kraftfahrzeuge mit integrierter Sicherheitsgurtstraffung und Sicherheitsgurtkraftbegrenzung nach der im Patentanspruch 1 näher definierten Art.

Sicherheitsgurtsysteme dienen dem umfassenden Insassenschutz bei Kraftfahrzeugen in Kollisionsfällen und bestehen in der Regel aus einer Kombination eines über die Schulter des Insassen diagonal geführten Schultergurtbandes und eines im Beckenbereich des Insassen horizontal geführten Beckengurtbandes.

Die aus dem heutigen einschlägigen Stand der Technik bekannten Sicherheitsgurtsysteme sind üblicherweise mit einem Mechanismus zur Gurtstraffung und einem Mechanismus zur Gurtkraftbegrenzung ausgestattet, die gegebenenfalls auch in einer Vorrichtung zusammengefaßt sein können. Die Gurtstraffung dient dazu, den Sicherheitsgurt nach Eintritt der durch die Kollision auftretenden Beschleunigungskräfte, die auf den Insassen einwirken, ohne wesentliche zeitliche Verzögerung in einem solchen Maße zu straffen, daß die abrupt beschleunigte Masse des Insassen im ausreichenden Maße zurückgehalten werden kann.

Diese Gurtstraffung kann während des Verlaufs der durch die Kollision bedingten Beschleunigung des Körpers jedoch nicht ohne weiteres aufrechterhalten werden, ohne zumindest in gewissem Umfang nachgiebig ausgestaltet zu sein, da aufgrund der Größenordnung der dabei auf den Insassen einwirkenden Kräfte schwerwiegende Verletzungen im Brustkorbbereich nicht zu vermeiden wären.

Es ist daher in der Regel ein zusätzlicher oder bereits im Gurtstraffmechanismus integrierter Gurtkraftbegrenzungsmechanismus vorgesehen, der die von der Straffung herrührende Kraft auf den Insassen begrenzt, und zwar in einem solchen Maße, daß einerseits Verletzungen verhindert werden und andererseits ein noch ausreichender Rückhalt des Insassen sichergestellt ist. Der Mechanismus zur Gurtkraftbegrenzung ermöglicht ab einem bestimmten Grenzwert der auf das Gurtband kollisionsbedingt einwirkenden Zugkräfte, der üblicherweise im Bereich von 4,5 kN angesiedelt ist, bis zu einem gewissen Grad ein Nachgeben der Gurtstraffung, die zusammen mit der infolge der dem Gurtband immanenten materialbedingten Dehnfähigkeit eine schwerwiegende Verletzungen verhindernde leichte Verzögerung im Rückhalteverhalten des Insassen bewirkt.

Die technischen Lösungen für Vorrichtungen zur Sicherheitsgurtstraffung und Sicherheitsgurtkraftbegrenzung sind im derzeitigen Stand der Technik aufgrund der zu berücksichtigenden Kinematik meist sehr aufwendig und daher erheblich kostenintensiv realisiert.

Aus dem deutschen Patent DE 43 24 967 ist beispielsweise eine gattungsähnliche Sicherheitsgurt-Rückhaltevorrichtung bekannt. Die Gurtstraffung erfolgt hier über einen selbstsperrenden Sicherheitsgurtaufrollautomaten, dessen Sperrung und damit Straffung des Gurtbandes von einem gurtbandsensitiven Steuersystem koordiniert wird. Die Sicherheitsgurtkraftbegrenzung erfolgt unter Zwischenschaltung eines Deformationsgliedes in Form eines Torsionsstabes. Der Sicherheitsgurtaufrollautomat ist gegenüber dem zugeordneten Fahrzeugrahmen verschiebbar angeordnet. Im Kollisionsfall blockiert der selbstsperrende Sicherheitsgurtaufrollautomat den weiteren Gurtbandauszug, wodurch dieser dann gegenüber dem Fahrzeugrahmen verschoben wird. Mit dessen Verschiebung ist eine Verdrehung von Zahnrädern verbunden, die mittelbar am Gehäuse des Sicherheitsgurtaufrollautomaten angeordnet sind und sich auf einer entsprechenden Verzahnung am Fahrzeugrahmen abwälzen, wobei der Torsionsstab mit den Zahnrädern mittelbar in einer drehfesten Verbindung steht. Die Verdrehung des Torsionsstabes wiederum führt zu einer Verformungsarbeit und damit einhergehend einem gewünschten Abbau des am Sicherheitsgurtband angreifenden Lastniveaus.

Neben dem relativ komplizierten Aufbau wohnt dieser Sicherheitsgurt-Rückhaltevorrichtung der wesentliche Nachteil inne, nur ein einziges Mal im funktionsfähigen Zustand vorzuliegen. Der Torsionsstab wird bei kollisionsbedingter Überbeanspruchung zu Zwecken der Gurtkraftbegrenzung zerstört und steht daher einem nachfolgenden Einsatz nicht mehr zur Verfügung. Dieser Umstand erweist sich jedoch bei der Problematik von 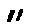 Sekundärkollisionen", beispielsweise bei Massenkarambolagen, wo das Kraftfahrzeug unter Umständen mehrmals abrupt beschleunigt und abgebremst werden kann, als äußerst nachteilig. Gerade für solche Fälle erscheint es jedoch wünschenswert, daß stets ein funktionsfähiges Sicherheitsgurt-Rückhaltesystem zur Verfügung steht, das den Insassen nach einer erfolgten 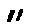 Erstkollision" auch jederzeit bei unmittelbaren 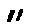 Folgekollisionen" sicher abzufangen vermag.

Ausgehend von dieser im geschilderten Stand der Technik anzutreffenden Problematik ist es die Aufgabe der vorliegenden Erfindung, ein Sicherheitsgurtsystem mit Sicherheitsgurtstraffung und Sicherheitsgurtkraftbegrenzung zu schaffen, das in seiner Gesamtheit nach einem Einsatz für anschließende Einsätze jederzeit uneingeschränkt funktionsfähig zur Verfügung steht. Darüber hinaus ist es Ziel der Erfindung, ein konstruktiv einfaches und somit kostengünstiges Sicherheitsgurtsystem zu realisieren.

Erfindungsgemäß wird diese Aufgabe mit einem Sicherheitsgurtsystem gemäß den Merkmalen des Patentanspruches 1 gelöst.

Demzufolge beruht der Kern der Erfindung auf einer reversiblen Ausgestaltung des gattungsgemäßen Sicherheitsgurtsystems, die dessen Rückführung in den funktionsfähigen Ausgangszustand ermöglicht.

Dem Sicherheitsgurtsystem gemäß der Erfindung wohnt gegenüber dem Stand der Technik der wesentliche Vorteil inne, daß dieses jederzeit in seinen funktionsfähigen Ausgangszustand überführbar ist, so daß für mehrere aufeinanderfolgende Kollisionen stets ein 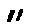 aktives" Sicherheitsgurtsystem zur Verfügung steht.

Ein weiterer Vorteil der Erfindung besteht darin, daß zur erfindungsgemäßen Lösung der reversiblen Ausgestaltung des Sicherheitsgurtsystems nur einfache Maschinenkomponenten erforderlich sind, die über eine einfache Konstruktion miteinander kombiniert werden, wodurch eine kostengünstige Fertigung begünstigt wird.

In einer vorteilhaften Ausgestaltung der Erfindung kann ein aus dem Stand der Technik in seiner Ausgestaltung und Funktionsweise hinlänglich bekannter Sicherheitsgurtaufrollautomat in einer vertikalen Gleitführung an einem Fahrzeugrahmen, üblicherweise der B-Säule des Kraftfahrzeuges, höhenverstellbar geführt und dort in geeigneter Art und Weise lösbar positioniert sein. Dabei können an einer Gehäuseunterseite des Sicherheitsgurtaufrollautomaten eine oder mehrere Federvorrichtungen angebracht sein, deren Ende an geeigneter Stelle der Gleitführung befestigt ist.

Hierbei ist bei einer bevorzugten Ausführungsform des Sicherheitsgurtsystems eine Federvorrichtung als Zugfeder, insbesondere als herkömmliche Schraubenfeder, ausgebildet, die in Abhängigkeit der von der Arretiervorrichtung gehaltenen Position des Sicherheitsgurtaufrollautomaten in der Gleitführung in einem über Normallänge gedehnten Zustand vorliegt, so daß sich eine Vorspannung einstellt, die von den zu berücksichtigenden kinematischen Parametern, beispielsweise des oben erwähnten Zugkraftgrenzwertes, abhängt und über die Ausgestaltung der Federkennlinie entsprechend erzielt wird.

Im arretierten Zustand ist das Sicherheitsgurtsystem arbeitsfähig. Im Fall einer Kollision des Kraftfahrzeuges, deren Stärke einen vorgegebenen Auslösegrenzwert übersteigt, wird die Arretiervorrichtung, beispielsweise in der Form einer reversiblen Einrastung, von einem üblicherweise mit der Airbagzündung gekoppelten elektronischen Auslösesteuergerät angesteuert, so daß die Arretiervorrichtung öffnet und den Sicherheitsgurtaufrollautomaten freigibt.

Bei einer vorherrschenden Vorspannung der Zugfeder wird der Sicherheitsgurtaufrollautomat von dieser in der Gleitführung nach unten, also entgegengesetzt zur Richtung des Sicherheitsgurtbandes und der daran angreifenden kollisionsbedingten Zugkräfte, gezogen. Damit wird das Gurtband gespannt und eine gegebenenfalls vorhandene Gurtlose beseitigt. Man erkennt, daß über die erfindungsgemäße Ausgestaltung mit einer unter Vorspannung stehenden Federvorrichtung in funktionell und technisch einfach realisierter Art und Weise ein Mechanismus zur Gurtstraffung geschaffen ist.

Im weiteren Verlauf der Kollision steigen die auf das Sicherheitsgurtband einwirkenden Zugkräfte erheblich an. Werden nun die Zugkräfte größer als die Federrate der Federvorrichtung, wird diese entsprechend nachgeben, wodurch die vom Sicherheitsgurtband auf den Insassen ausgeübte Rückhaltekraft und somit dessen Belastung verringert wird. Es wird deutlich, daß über die Wechselwirkung zwischen den Federkräften und den kollisionsbedingten Zugkräften die Funktion einer Sicherheitsgurtkraftbegrenzung von der Federvorrichtung mit erfüllt wird.

Die Wechselwirkung der Kräfte orientiert sich an der Höhe des vorgegebenen Gurtstraffgrenzwertes, der bei ca. 4,5 kN angesetzt ist. Demzufolge läßt sich gemäß der Erfindung die Einsatzschwelle und somit der Zeitpunkt der Sicherheitsgurtkraftbegrenzung auf einfachste Weise über eine entsprechende Auslegung der jeweiligen Federraten bestimmen.

In einer weiteren Ausführungsform des Sicherheitsgurtsystems gemäß der Erfindung kann statt einer Zugfeder mindestens eine Druckfeder vorgesehen sein. In einer bevorzugten Ausführungsform kann diese Druckfeder als Gasdruckfeder ausgebildet sein.

Eine auf Druck arbeitende Federvorrichtung ist dementsprechend oberhalb des Sicherheitsgurtaufrollautomaten in der Gleitführung anzuordnen, also in Richtung des Sicherheitsgurtbandes und der daran kollisionsbedingt angreifenden Zugkräfte. Handelt es sich bei der Druckfeder um eine herkömmliche Schraubenfeder, so liegt diese in der funktionsfähigen Ausgangsposition des Sicherheitsgurtaufrollautomaten zur Ausbildung der zur Gurtstraffung nötigen Vorspannung selbstverständlich in einem unter Normallänge zusammengedrückten Zustand vor. Wird bei einer Kollision der Sicherheitsgurtaufrollautomat von der Arretiervorrichtung freigegeben, wird dieser demzufolge von der Druck- oder Gasdruckfeder entgegengesetzt zu den am Gurtband angreifenden Zugkräften in der Gleitführung nach unten verschoben. Um ein Einknicken der Schraubenfeder zu verhindern, kann diese hierbei zusätzlich in der Gleitführung vertikal unterstützend geführt sein.

Es wird deutlich, daß bei dem Sicherheitsgurtsystem Federvorrichtungen der unterschiedlichsten Ausgestaltung zum Einsatz kommen können, mit denen sich gemäß der Erfindung ein Verschieben des Sicherheitsgurtaufrollautomaten bewerkstelligen läßt, bis der zur Gurtkraftbegrenzung entscheidende Grenzwert erreicht ist. Im allgemeinen sind Federvorrichtungen aus mehreren miteinander kombinierten Federn mit unterschiedlichen, progressiven und/oder degressiven Federkennlinien denkbar, beispielsweise mehrere in Reihe oder Serie geschaltete Zug- und/oder Druckfedern, wobei sich die gemeinsame Auslegung der resultierenden Federwirkung stets an der für den Kollisionsfall zu berücksichtigenden Kinematik orientiert.

Nachdem im Verlauf der Kollision das Gurtband durch die Federvorrichtung des Sicherheitsgurtsystems zuerst gestrafft und anschließend dessen Rückhaltekraft begrenzt wurde, liegt das Sicherheitsgurtsystem üblicherweise nicht mehr im funktionsfähigen Ausgangszustand vor. Am Ende der Kollision greift keine durch die Beschleunigung des Insassen bedingte Zugkraft mehr am Gurtband an, so daß lediglich noch die Federkraft auf den Sicherheitsgurtaufrollautomaten einwirkt. Soll nun dieser in seine funktionsfähige Ausgangsposition zurückgeführt werden, sind diese Federkräfte zu überwinden.

Zu diesem Zweck weist das Sicherheitsgurtsystem gemäß der Erfindung einen Rückstellmechanismus auf, der nach Ende einer erfolgten Kollision, den Sicherheitsgurtaufrollautomaten in seine ursprüngliche Lage in der Gleitführung überführt, wobei die Federvorrichtung wieder unter die vorgegebene Vorspannung gesetzt wird. In seiner funktionsfähigen Ausgangsposition wird der Sicherheitsgurtaufrollautomat mittels der Arretiervorrichtung wieder fixiert und steht somit einem erneuten Einsatz für eine Nachfolgekollision zur Verfügung. Dieser Vorgang ist beliebig oft wiederholbar. Das Sicherheitsgurtsystem zeichnet sich aufgrund der erfindungsgemäßen Ausgestaltung durch eine unbegrenzte Reversibilität aus.

Hinsichtlich seiner Anordnung kann der Rückstellmechanismus unterhalb oder oberhalb am Sicherheitsgurtaufrollautomaten angeordnet sein, wobei er sich während der Kollision mit diesem verschiebt. Alternativ hierzu kann der Rückstellmechanismus auch unterhalb oder oberhalb des Sicherheitsgurtaufrollautomaten an der Gleitführung angeordnet und mit dieser starr verbunden sein, wobei entsprechende bewegbare Rückführungsmittel den Rückstellmechanismus mit den Sicherheitsgurtaufrollautomaten verbinden.

Die Realisierung des Rückstellmechanismus ist mit aus dem Stand der Technik hinlänglich bekannten elektrischen und/oder hydraulischen und/oder pneumatischen Vorrichtungen möglich.

In einer bevorzugten Ausführungsform des Sicherheitsgurtsystems ist der Rückstellmechanismus am Sicherheitsgurtaufrollautomaten angeordnet und kann als Elektromotor ausgebildet sein, der einen Zahnradantrieb aufweist. Zur Rückführung des Sicherheitsgurtaufrollautomaten können sich eines oder mehrere Zahnräder des Elektromotors auf einem komplementären Zahnprofil abwälzen, das in der Gleitführung starr angeordnet ist. Während des Vorgangs der Gurtstraffung befindet sich dann der Zahnradantrieb im Leerlauf. Das Zahnprofil kann beispielsweise über eine in der Gleitführung vertikal angeordnete Zahnstange oder eine entsprechende Ausstanzung und Profilierung des Gleitführungsbleches bewerkstelligt sein.

Wenn sich der Elektromotor oberhalb des Sicherheitsgurtaufrollautomaten starr an der Gleitführung befindet, kann als Mittel zur Rückführung ein geeignetes Zugseil dienen, das den Sicherheitsgurtaufrollautomaten nach oben zieht.

Anstatt eines Elektromotor kann selbstverständlich auch eine aus dem Stand der Technik an sich bekannte pneumatische Turbine eingesetzt werden, die über die Pneumatik des Kraftfahrzeuges angesteuert wird und ein Zahnradgetriebe, eine Seilwinde oder ähnliche Mittel antreiben kann.

Der an der Gleitführung befestigte Rückstellmechanismus kann alternativ auch als pneumatischer oder hydraulischer Druckzylinder ausgebildet sein, wobei der Sicherheitsgurtaufrollautomat über eine an diesem angreifende entsprechende Stellstange verschiebbar ist.

Im folgenden wird die Erfindung anhand den in der Zeichnung dargestellten Ausführungsbeispiele beschrieben.

Es zeigt:
- Fig. 1: eine schematische dreidimensionale Darstellung eines Ausführungsbeispiels des Sicherheitsgurtsystems mit einem an einem Sicherheitsgurtaufrollautomaten angeordneten Rückstellmechanismus und einer Zahnstange als Rückführungsmittel;
- Fig. 2: eine Seitenansicht des in Fig. 1 gezeigten Ausführungsbeispiels; und
- Fig. 3: eine schematische dreidimensionale Darstellung eines weiteren Ausführungsbeispiels des Sicherheitsgurtsystems mit einem an der Gleitführung angeordneten Rückstellmechanismus und einem Zugseil als Rückführungsmittel.

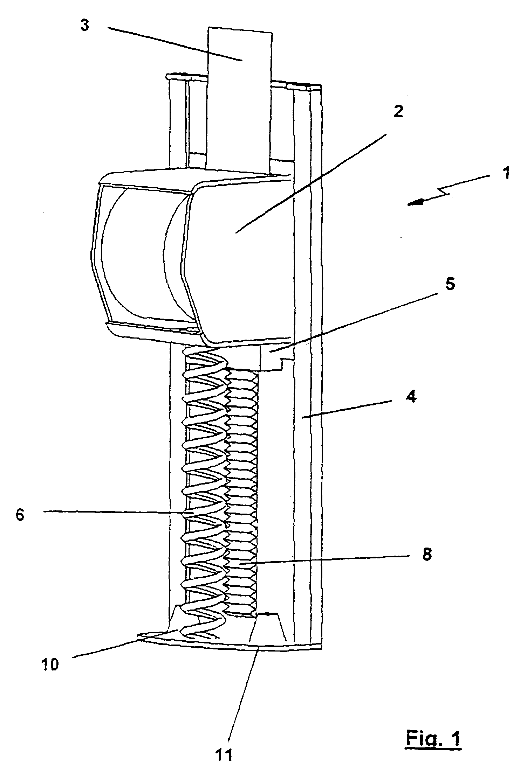

Ein in Fig. 1 gezeigtes Sicherheitsgurtsystem 1 weist einen Sicherheitsgurtaufrollautomaten 2 auf, der ein Gurtband 3 führt. Der Sicherheitsgurtaufrollautomat 2 ist in einer C-förmigen Gleitführung 4 höhenverstellbar geführt. Die Gleitführung 4 selbst ist einer nicht näher dargestellten B-Säule eines Fahrzeugrahmens angeordnet.

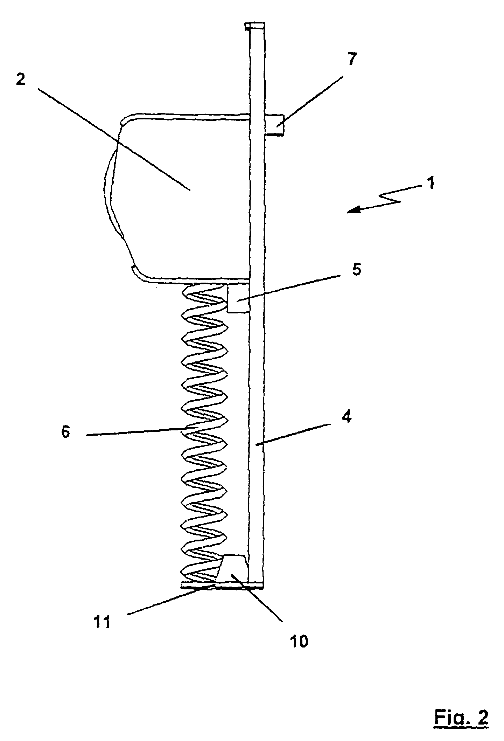

Der Sicherheitsgurtaufrollautomat 2 wird von einer Arretiervorrichtung 7, wie dies in Fig. 2 prinzipmäßig gezeigt ist, in einer vorgegebenen funktionsfähigen Ausgangsposition fixiert. Im Fall einer Kollision wird die Arretiervorrichtung 7 von einem nicht gezeigten Auslösesteuergerät angesteuert, öffnet sich und gibt den Sicherheitsgurtaufrollautomaten 2 frei.

An der Gehäuseunterseite des Sicherheitsgurtaufrollautomaten 2, also an der dem Gurtband 3 gegenüberliegenden Seite, greift eine Schraubenfeder 6 an, die an ihrem gegenüberliegenden Ende an einem senkrecht zur Gleitführung 4 und diese abschließenden Flansch 11 abgestützt ist. In der Ausgangsposition des Sicherheitsgurtaufrollautomaten 2 steht diese Schraubenfeder 6 unter Vorspannung. Bei geöffneter Arretiervorrichtung 7 zieht diese Schraubenfeder 6 unter Ausbildung der Sicherheitsgurtstraffung den Sicherheitsgurtaufrollautomaten 2 nach unten.

Der Sicherheitsgurtaufrollautomat 2 weist auf seiner Unterseite den hier als Elektromotor ausgebildeten Rückstellmechanismus 5 auf. Im Inneren des Rückstellmechanismus 5 ist ein Zahnradgetriebe angeordnet, dessen Zahnrad sich auf einer Zahnstange 8 abwälzt. Die Zahnstange 8 ist dabei in der Mitte der Gleitführung 4 angeordnet. Während des Vorgangs der Gurtstraffung befindet sich der Rückstellmechanismus 5 im Leerlaufbetrieb, das Zahnrad rollt ohne Widerstand auf dem Profil der Zahnstange 8 ab, wohingegen beim Vorgang der Rückführung das Zahnrad in die Zahnstange 8 aktiv eingreift und so den Sicherheitsgurtaufrollautomaten 2 in der Gleitführung 4 nach oben bewegt.

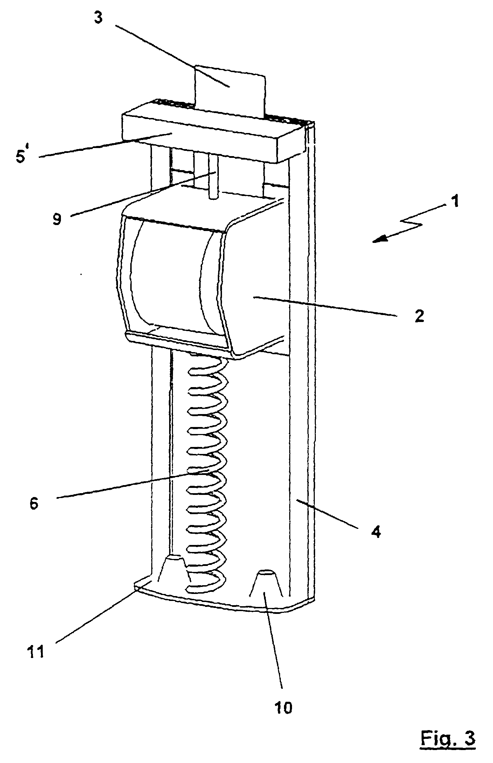

In einem weiteren Ausführungsbeispiel des Sicherheitsgurtsystems 1, wie dieses die Fig. 3 wiedergibt, ist ein zu der Ausführung nach Fig. 1 und Fig.2 alternativer Rückstellmechanismus 5' oberhalb des Sicherheitsgurtaufrollautomaten 2 angeordnet und an der Gleitführung 4 befestigt. Als Rückführungsmittel dient in dieser Ausführung ein Zugseil 9, das den Sicherheitsgurtaufrollautomaten 2 nach oben zieht.

Zur Begrenzung der vom Sicherheitsgurtaufrollautomaten 2 während der Gurtstraffung vollführten Gleitbewegung nach unten weist der abschließende Flansch 11 zwei Begrenzungsanschläge 10 auf.

## Patentansprüche

1. Sicherheitsgurtsystem für Kraftfahrzeuge mit einem das Sicherheitsgurtband führenden Sicherheitsgurtaufrollautomaten, der in einer am Fahrzeugrahmen angeordneten, im wesentlichen vertikalen Gleitführung höhenverstellbar geführt ist, mit einer Arretiervorrichtung, die den Sicherheitsgurtaufrollautomaten in einer funktionsfähigen Ausgangsposition in der Gleitführung arretiert und im Kollisionsfall die Arretierung öffnet, mit einem Sicherheitsgurtstraffmechanismus, der bei geöffneter Arretierung den Sicherheitsgurtaufrollautomaten entgegengesetzt zur Richtung des Sicherheitsgurtbandes und der daran angreifenden kollisionsbedingten Zugkräfte in der Gleitführung verschiebt, bis das Sicherheitsgurtband ausreichend gestrafft ist, mit einem Sicherheitsgurtkraftbegrenzungsmechanismus, der die vom Sicherheitsgurtstraffmechanismus erzeugte Straffung des Sicherheitsgurtbandes in vorgegebener Weise begrenzt, und mit einem Rückstellmechanismus (5,5'), der nach Ende der Kollision und des dadurch bedingten Angriffs von Zugkräften an dem Sicherheitsgurtband (3) den Sicherheitsgurtaufrollautomaten (2) in seine funktionsfähige Ausgangsposition in der Gleitführung (4) zurückführt, wo dieser wieder arretiert wird.

2. Sicherheitsgurtsystem nach Anspruch 1,
dadurch **gekennzeichnet,**
daß der Sicherheitsgurtstraffmechanismus mindestens mit einer Federvorrichtung (6) ausgebildet ist, die zwischen der Gleitführung (4) und dem Sicherheitsgurtaufrollautomaten (2) angeordnet ist und in der funktionsfähigen Ausgangsposition des Sicherheitsgurtaufrollautomaten (2) unter einer solchen Vorspannung steht, daß im Kollisionsfall der von der Arretiervorrichtung (7) ausgelöste Sicherheitsgurtaufrollautomat (2) unter Ausbildung der Sicherheitsgurtstraffung in der Gleitführung (4) verschoben wird, bis sich ein Kräftegleichgewicht mit den an dem Sicherheitsgurtband (3) angreifenden Zugkräften unter Ausbildung der Sicherheitsgurtkraftbegrenzung einstellt.

3. Sicherheitsgurtsystem nach Anspruch 2,
dadurch **gekennzeichnet,**
daß die Federvorrichtung (6) als Zugfeder ausgebildet ist, die entgegengesetzt zur Richtung der an dem Sicherheitsgurtband (3) angreifenden Zugkräfte in der Gleitführung (4) unterhalb des Sicherheitsgurtaufrollautomaten (2) angeordnet ist.

4. Sicherheitsgurtsystem nach Anspruch 2,
dadurch **gekennzeichnet,**
daß die Federvorrichtung (6) als Druckfeder, insbesondere als Gasdruckfeder, ausgebildet ist, die in Richtung der an dem Sicherheitsgurtband (3) angreifenden Zugkräfte in der Gleitführung (4) oberhalb des Sicherheitsgurtaufrollautomaten (2) angeordnet ist.

5. Sicherheitsgurtsystem nach Anspruch 2,
dadurch **gekennzeichnet,**
daß die Stärke der Sicherheitsgurtstraffung und Sicherheitsgurtkraftbegrenzung über die Auslegung der Federraten der Federvorrichtungen (6) individuell festlegbar ist.

6. Sicherheitsgurtsystem nach Anspruch 1,
dadurch **gekennzeichnet,**
daß der Rückstellmechanismus (5,5') elektrisch und/oder pneumatisch und/oder hydraulisch ausgebildet ist.

7. Sicherheitsgurtsystem nach Anspruch 6,
dadurch **gekennzeichnet,**
daß der Rückstellmechanismus (5,5') in Richtung der am Sicherheitsgurtband (3) angreifenden Zugkräfte gesehen unterhalb oder oberhalb an dem Sicherheitsgurtaufrollautomaten (2) angeordnet ist.

8. Sicherheitsgurtsystem nach Anspruch 7,
dadurch **gekennzeichnet,**
daß der Rückstellmechanismus (5) einen Elektromotor mit einem Zahnradantrieb aufweist, wobei das Zahnrad in ein in der Gleitführung (4) vertikal angeordnetes Zahnprofil (8) eingreift.

9. Sicherheitsgurtsystem nach Anspruch 8,
dadurch **gekennzeichnet,**
daß das Zahnprofil (8) als separate Zahnstange ausgebildet ist.

10. Sicherheitsgurtsystem nach Anspruch 6,
dadurch **gekennzeichnet,**
daß der Rückstellmechanismus (5,5') in Richtung der an dem Sicherheitsgurtband (3) angreifenden Zugkräfte gesehen unterhalb oder oberhalb des Sicherheitsgurtaufrollautomaten (2) an der Gleitführung (4) angeordnet ist.

11. Sicherheitsgurtsystem nach Anspruch 10,
dadurch **gekennzeichnet,**
daß der Rückstellmechanismus (5') einen Elektromotor mit einer Winde und mindestens einem Zugseil (9) aufweist, das am Sicherheitsgurtaufrollautomaten (2) angreift.
